Europäisches Patentamt

European Patent Office

Office européen des brevets

(11) Veröffentlichungsnummer: **0 116 675**
**B1**

(45) Veröffentlichungstag der Patentschrift:
**10.12.86**

(51) Int. Cl.⁴: **A 61 C 5/06**

(21) Anmeldenummer: **83106111.4**

(22) Anmeldetag: **22.06.83**

(54) **Portionspackung für in einer Mischkapsel in einem Vibrationsmischer zu mischendes Dentalmaterial.**

(30) Priorität: **04.02.83 DE 3303838**

(43) Veröffentlichungstag der Anmeldung:
**29.08.84 Patentblatt 84/35**

(45) Bekanntmachung des Hinweises auf die Patenterteilung:
**10.12.86 Patentblatt 86/50**

(84) Benannte Vertragsstaaten:
**AT BE CH DE FR GB IT LI NL SE**

(56) Entgegenhaltungen:
**DE - A - 1 566 557**
**DE - A - 2 831 005**
**DE - C - 631 672**
**FR - A - 1 144 883**
**US - A - 2 687 130**
**US - A - 4 182 447**

(73) Patentinhaber: **Mühlbauer, Ernst, Fangdieckstrasse 61,
D-2000 Hamburg 53 (DE)**

(72) Erfinder: **Mühlbauer, Ernst, Fangdieckstrasse 61,
D-2000 Hamburg 53 (DE)**

(74) Vertreter: **Glawe, Delfs, Moll & Partner Patentanwälte,
Postfach 26 01 62 Liebherrstrasse 20,
D-8000 München 26 (DE)**

ACTORUM AG

## Beschreibung

Die Erfindung bezieht sich auf eine Portionspakkung für in einer Mischkapsel in einem Vibrationsmischer zu mischendes Dentalmaterial mit einer im Aufbewahrungszustand eine Dentalmaterialkomponente von der anderen trennenden und durch die Einwirkung von Mischvibration zerstörbaren Packungsfolie.

Es ist eine Mehrkomponentenkapsel für Dentalzwecke bekannt (DE-A-2 831 005), in deren Mischraum eine Komponente frei enthalten ist, während die andere Komponente in einem Folienbeutel eingeschweisst ist und dadurch von der anderen Komponente getrennt ist, bis der Folienbeutel durch die Mischvibration zerstört wird. Offensichtlich genügt es, lediglich eine Komponente in einem Beutel einzuschliessen, um die chemische Trennung während der Lagerzeit zu sichern. Die Verwendung der Mehrkomponentenkapsel zur Aufbewahrung und zur einmaligen Mischung bedeutet einen gewissen Aufwand.

Es ist auch bekannt, dass der Zahnarzt in eine mehrfach zu verwendende Mischkapsel Silberfeilung sowie aus einem Dosiergerät eine entsprechende Menge Quecksilber gibt, die Kapsel verschliesst und die Komponenten anschliessend im Vibrationsgerät mischt. Zwar ist dies Verfahren billiger, aber es ergeben sich leichter Ungenauigkeiten als bei der maschinellen Vordosierung, und der Arzt ist der unmittelbaren Wirkung des Quecksilbers ausgesetzt.

Wenn eine Kapsel mehrfach zur Amalgambereitung benutzt wird, muss sie zwischen den einzelnen Verwendungsfällen oder zumindest von Zeit zu Zeit gereinigt werden. Ferner ist als Nachteil zu verzeichnen, dass die bereitete Mischung aus der Kapsel verhältnismässig umständlich entnommen werden muss, wobei auch die ebenfalls in der Kapsel enthaltenen Reste der verbrauchten Packung stören können.

Der Erfindung liegt daher die Aufgabe zugrunde, die von Einwegkapseln bekannte Einfachheit des Verfahrens zu verbinden mit dem geringen Aufwand der mehrfachen Kapselverwendung. Ferner soll eine hygienische Mischung unabhängig von dem Reinigungszustand der Kapsel erreicht werden. Der Arzt soll auch nicht der unmittelbaren Wirkung des Quecksilbers ausgesetzt werden.

Die erfindungsgemässe Lösung besteht darin, dass die durch die Einwirkung der Mischvibration zerstörbare Packungsfolie samt den von ihr getrennten, die Dentalmaterialkomponenten aufnehmenden Portionsräumen, von einer durch die Einwirkung der Mischvibration nicht zerstörbaren Packungshülle umschlossen ist.

Die Einschliessung beider Komponenten in je einen Folienbeutel erlaubt ihre beliebige Verwendung, unabhängig davon, ob sie von vornherein in einer Einwegkapsel geliefert oder erst beim Zahnarzt in eine gegebenenfalls mehrfach zu verwendende Mischkapsel eingelegt werden. Sie erlauben auch eine leichte und einfache Dosierung, indem in eine Mischkapsel jeweils eine solche Zahl von Folienbeuteln der Komponenten eingelegt werden, wie es der gewünschten Amalgammenge entspricht.

Die beiden Komponentenportionen sind untrennbar miteinander verbunden und können daher sehr einfach verwendet werden, ohne dass die Gefahr besteht, dass sie in ungeeignetem Mengenverhältnis kombiniert werden.

Ein wesentlicher Vorteil der Erfindung besteht darin, dass die Mischung nach dem Mischvorgang nicht frei innerhalb des Mischraumes der Mischkapsel liegt sondern nach wie vor von einem Folienbeutel umschlossen bleibt, in welchem lediglich die innere Trennfolie zerstört ist. Man kann daher einfach die geschlossene Portionspackung aus der Mischkapsel nehmen, aufreissen und die Mischung mit dem Spatel herausnehmen oder sie zwischen zwei Fingern herausquetschen. Dadurch wird die Entnahme der Mischung wesentlich vereinfacht und ohne spezielle Vorkehrungen wird erreicht, dass die Mischung unabhängig vom Zustand des Mischraumes der Mischkapsel hygienisch bleibt.

In diesem Zusammenhang können sowohl die Mischkapsel als auch die Vibrationsmischgeräte, die für Dentalzwecke verwendet werden, als bekannt vorausgesetzt werden. Die Mischkapseln sind längliche, durch einen abnehmbaren Deckel verschlossene Behälter mit einer Länge in der Grössenordnung von 3 cm und einem Durchmesser in der Grössenordnung von 1 cm. Die Mischgeräte sind so ausgebildet, dass die darin eingespannten Mischkapseln in ihrer Längsrichtung mit einer Frequenz von beispielsweise 300 Hz hin- und herbewegt werden können, so dass das im Innenraum der Kapsel (Mischraum) enthaltene Gut zwischen den Endwänden des Mischraums hin- und hergeschleudert wird. Das Volumen des Guts macht nur einen sehr geringen Teil des Mischraumvolumens aus. Typische Amalgamportionen, wie sie vom Zahnarzt in einem Mischvorgang zubereitet werden, liegen zwischen 0,5 g und 1 g.

Es ist nicht erforderlich, dass die Portionspackung erst beim Zahnarzt unmittelbar vor der Verwendung in eine Mischkapsel gegeben wird; vielmehr ergibt die Erfindung auch den Vorteil, dass bei der Herstellung von Einwegkapseln die Füllung der Kapseln unabhängig von der Dosierung und Einhüllung der Komponenten wird. Schliesslich ergibt sich der Vorteil, dass es nicht erforderlich ist, die Kapsel dicht zu verschliessen, auch wenn diese zu langzeitiger Aufbewahrung vorgesehen ist, weil die Komponenten in ihrer Beutelpackung hinreichend dicht von atmosphärischen Einflüssen abgeschlossen werden können bzw. verhütet werden kann, dass sie durch Verdampfen giftige Einflüsse in die umgebene Atmosphäre senden.

Die Anordnung der durch die Mischvibration zerstörbaren Packungsfolie zu der nicht zerstörbaren Packungshülle kann unterschiedlich getroffen sein. Bei einer vorteilhaften Ausführungsform sind beispielsweise zwei Folienbeutel vorhanden, von denen einer als Hüllfolienbeutel eine erste Dentalmaterialkomponente und den die zweite Dentalmaterialkomponente enthaltenden, zerstörbaren Folienbeutel frei umschliesst. Bei einer anderen zweckmässigen Ausführungsform ist vorgesehen, dass zwei gemeinsam den Hüllfolienbeutel bildende Folien beiderseits der zerstörbaren Folie mit dieser oder miteinander verschweisst sind.

Nach dem Mischen bildet die äussere, unter der Mischvibration nicht zerstörbare Packungshülle einen Behälter für das gemischte Dentalmaterial. Damit dieser Behälter einfacher benutzt werden kann, kann er nach der Erfindung als halbflexibler, becherförmiger Packungsteil ausgebildet sein. Unter dem Begriff halbflexibel ist zu verstehen, dass er die Becherform auch dann mehr oder weniger stark deformiert beibehält, wenn er zwischen den Fingern zwecks Entleerung festgehalten wird. Seine Becherform erleichtert die Entnahme des gemischten Materials.

Ferner kann nach der Erfindung vorgesehen sein, dass die Packungshülle mit einer Öffnungseinrichtung versehen ist. Unter einer Öffnungseinrichtung sind diejenigen Teile oder Formgebungen zu verstehen, die das Öffnen ermöglichen oder erleichtern. Dazu gehören beispielsweise Grifflaschen, die nach aussen von den die eigentliche Packungshülle bildenden Teilen vorstehen, damit man daran zum Zwecke des Öffnens angreifen und Kraft ausüben kann. Ferner gehören dazu Sollreissstellen und Kerben im Schweissrand, an denen der Öffnungsriss beginnen kann.

Die erfindungsgemässe Portionspackung kann die Dentalmaterialkomponenten ohne wesentlichen Leerraum umschliessen, damit die beim Aufprall der Portionspackung während der Mischvibration an den Enden der Mischkapsel hervorgerufenen Mischkräfte ungedämpft auf die zu mischenden Dentalmaterialkomponenten übertragen werden. Dies gilt insbesondere dann, wenn für die nicht zerstörbare Packungshülle ein flexibler Werkstoff verwendet wird, der die Kräfte gänzlich an das Dentalmaterial weitergibt. Statt dessen kann aber auch vorgesehen sein, dass die Portionspackung einen gewissen Leerraum enthält, der den Dentalmaterialkomponenten eine gewisse Verwirbelung gestattet. Dies gilt insbesondere dann, wenn die Packungshülle ganz oder teilweise aus halbflexiblem oder steiferem Werkstoff besteht.

Zweckmässig kann es auch sein, dass die Portionspackung ein Pistill enthält, also einen Körper aus beispielsweise Glas, Keramik, Kunststoff, der durch seine durch die Mischvibration hervorgerufene Bewegung innerhalb der Portionspackung die Mischung der Komponenten fördert.

Die Einschliessung des Pulvers, insbesondere des Silberpulvers, in einen Folienbeutel hat den grossen Vorteil, dass die Portionsgrösse mit grosser Genauigkeit vorherbestimmt werden kann. Dieser Vorteil ist auch dann vorhanden, wenn das Pulver in brikettierter Form vorliegt. Es ist nämlich bekannt, dem Zahnarzt das Silberpulver in Form von gepressten Tabletten zur Verfügung zu stellen, die unter der Einwirkung der Mischvibration zu Pulver zerfallen und die fabrikationsmässig auf eine bestimmte Gewichtsportion eingestellt sind. Da diese Tabletten während des Transports und bei der Verwendung, beispielsweise beim Herausnehmen einzelner Tabletten, sich aneinander reiben, tritt durch Abrieb ein ständiger Gewichtsverlust ein, der zu einer Verfälschung der Gewichtsverhältnisse bei der Amalgambereitung führen kann. Dieser Abriebverlust wird durch die Einschliessung des Silbers in Folienbeutel verhindert.

Die Portionspackung kann bedruckt werden, und zwar beispielsweise mit arzneimittelrechtlich erforderlichen Angaben wie Herstellername, Gewicht, Verfallzeit, Abfülldatum, Materialangaben usw. Die einzelnen Portionspackungen können innerhalb eines Bandes gleichartiger Packungen aufgereiht sein und durch Perforation bzw. Sollbruchstellen voneinander und gegebenenfalls auch von den die Informationen tragenden Bandteilen abtrennbar sein.

Die Erfindung wird im folgenden näher unter Bezugnahme auf die Zeichnung erläutert, die vorteilhafte Ausführungsbeispiele der Erfindung schematisch veranschaulicht. Es zeigen:

Fig. 1 einen Längsschnitt durch eine Mischkapsel in etwa natürlichen Massverhältnissen,

Fig. 2 einen Schnitt durch eine erste Ausführungsform der Portionspackung in vergrössertem Massstab,

Fig. 3 eine Draufsicht auf diese Portionspackung und

Fig. 4 einen der Fig. 2 entsprechenden Schnitt durch dieselbe Packung nach der Mischung;

Fig. 5 eine zweite Ausführungsform;

Fig. 6 eine dritte Ausführungsform mit zwei ineinander liegenden Beuteln,

Fig. 7 die Ausführungsform gemäss Fig. 6 nach Durchführung des Mischvorgangs und

Fig. 8 und 9 eine perspektivische Darstellung und eine Schnittansicht einer vierten Ausführung.

Die Mischkapsel 1 besteht aus einem Behälterteil 2 und einem darauf passend angeordneten, entfernbaren und gegebenenfalls wieder schliessbaren Deckel 3, die gemeinsam den Mischraum 4 einschliessen, in welchem sich eine Portionspackung 5 befindet, die je eine Portionstasche für zusammenpassende Mengen von Quecksilber und Silberpulver enthält. Durch Vibration der Kapsel in einem nicht dargestellten Mischgerät in Pfeilrichtung 6 wird die Portionspackung 5 abwechselnd zum heftigen Aufprall auf den beiden Stirnflächen des Mischraums 4 gebracht, wobei die die beiden Portionstaschen trennende Folie innerhalb der Portionspackung zerreisst, woraufhin die Mischung der Komponenten stattfinden kann.

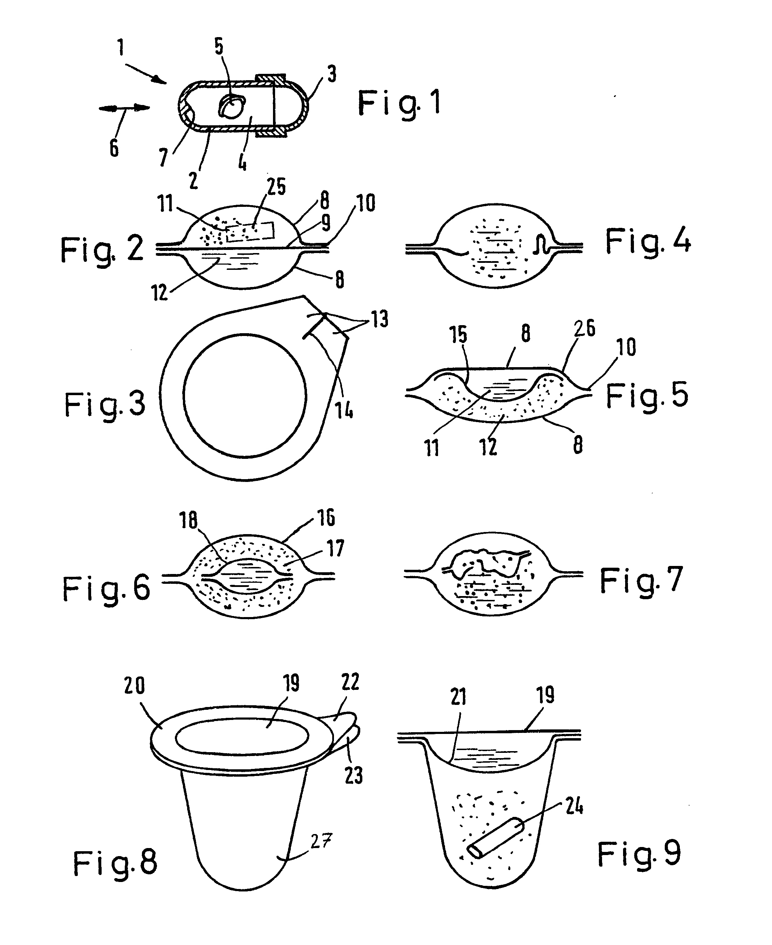

Die erste Ausführungsform der Portionspackung gemäss Fig. 2 bis 4 wird von zwei Folien 8, die die von der Mischvibration nicht zerstörbare Packungshülle bilden, und einer Trennfolie 9 zusammengesetzt, die in dem umlaufenden Schweissrand 10 fest miteinander verschweisst sind, wodurch Portionstaschen 11 und 12 zur Aufnahme der Silberfeilung und des Quecksilbers gebildet werden. Unter den Kräften der Mischvibration reisst die Trennfolie 9, wodurch gemäss Fig. 4 die beiden Komponenten zusammenkommen können und durch die Vibration gemischt werden. Der Schweissrand kann gemäss Fig. 3 zwei benachbart nach aussen vorstehende Lappen 13 bilden, zwischen denen ein Spalt oder eine Kerbe 14 vorgesehen ist. Durch Reissen der Lappen 13 in unterschiedlicher Richtung kann man, ausgehend von der Kerbe 14, den Beutel nach der Mischung aufreissen, um den Inhalt entnehmen zu können.

Die Ausführungsform gemäss Fig. 5 ist derjenigen gemäss Fig. 2 bis 4 im Prinzip und in der Verwendung gleich; der Unterschied besteht darin, dass die Trennfolie 15 bei 26 gesondert mit einer der beiden Hüllfolien 8 verschweisst ist, die ihrerseits bei 10 miteinander verschweisst sind. Diese Ausführungsform hat den Vorteil, dass die Schweissvorgänge zum Schliessen der beiden Taschen 11, 12 zeitlich und räumlich getrennt voneinander durchgeführt werden können.

Im Ausführungsbeispiel gemäss Fig. 6 und 7 ist in der aus zwei zusammengeschweissten Folien bestehenden, unter der Mischvibration nicht zerstörbaren Packungshülle 16 ausser der Silberfeilung 17 auch ein zweiter Packungsbeutel 18 frei untergebracht, der aus der unter der Mischvibration zerstörbaren Folie besteht und das Quecksilber enthält. Unter der Mischvibration wird der Beutel 18 gemäss Fig. 7 zerstört, so dass die beiden Komponenten zusammenkommen können.

Die Folien, aus denen in den Beispielen 2 bis 7 die Packungshülle besteht, können weich sein, so dass sie keine bestimmte Gestalt anzunehmen geneigt sind. Nach dem Öffnen kann der Inhalt aus ihnen herausgequetscht werden. Statt dessen ist es aber auch möglich, dass eine der beiden Hüllfolien steifer ist, um nach dem Abtrennen der anderen Hüllfolie und gegebenenfalls der Trennfolie einen schalen- oder becherförmigen Behälter zu bilden, von dem man das Mischgut leichter entnehmen kann. In diesem Fall sind die Öffnungseinrichtungen zweckmässigerweise nicht so ausgebildet, wie dies in Fig. 3 dargestellt ist, sondern so, dass man eine Hüllfolie wie einen Deckel längs der entsprechend schwächer ausgebildeten Schweissnaht vom Rand der als Schale oder Becher ausgebildeten Hüllfolie abziehen kann. Diesem Prinzip folgt auch die Ausführungsform gemäss Fig. 8 und 9, bei der der ausgeprägt becherförmige Teil 27 der Packungshülle relativ steif ausgebildet ist, während die Deckelfolie 19, die längs des Schweissrandes 20 unter Einschluss der Trennfolie 21 auf den Rand des Becherteils 27 aufgeschweisst ist, flach sein kann. Die Deckelfolie 19 und der Becherteil 27 haben am Rand lappenförmige Vorsprünge 22, 23, an denen man anfassen kann, um die Deckelfolie von dem Rand des Becherteils 27 abziehen zu können. Dabei kann die Anordnung so getroffen sein, dass die Trennfolie 21 (abweichend von der Darstellung) ausschliesslich mit der Deckelfolie 19 verbunden ist oder dass die gemeinsame Schweissnaht aller drei Folien am schwächsten zwischen der Trennfolie 21 und dem Rand des Becherteils 27 ist, damit beim Abziehen der Deckelfolie 19 auch gleichzeitig die Reste der Trennfolie 21 von dem Becherteil 27 abgetrennt werden.

Der Becherteil 27 kann in bezug auf das Volumen der zu mischenden Komponenten reichlich gross ausgeführt werden, damit ein gasgefüllter Platz bleibt, in welchen die zu mischenden Komponenten mischungsverbessernd umhergeschleudert werden können, wenn die Packung gegen die Enden der Mischkapsel prallt. Ein Pistill 24 kann zur Verbesserung der Mischwirkung beigegeben sein.

Während die Zeichnungen die Pulverkomponente im allgemeinen durch Punktierung im pulverförmigen Zustand andeuten, kann diese doch auch brikettiert in Form einer Tablette in der Portionspackung vorgesehen sein, wie dies beispielsweise in Fig. 2 bei 25 durch gestrichelten Umriss angedeutet ist.

Zweckmässigerweise ist die durch die Mischvibration zerstörbare Folie spezifisch mehrfach leichter als die pulverförmige Dentalmaterialkomponente.

Wenn in den Ansprüchen von Becherform gesprochen wird, so soll dies auch ähnliche Formen wie die Schalenform gemäss Fig. 2 mit einschliessen.

**Patentansprüche**

1. Portionspackung für in einer Mischkapsel (1) zu mischendes Dentalmaterial mit einer im Aufbewahrungszustand eine Dentalmaterialkomponente von der anderen trennenden und durch die Einwirkung von Mischvibration zerstörbaren Packungsfolie (9, 15, 18, 21), dadurch gekennzeichnet, dass die durch die Einwirkung der Mischvibration zerstörbare Packungsfolie (9, 15, 18, 21) samt den von ihr getrennten, die Dentalmaterialkomponenten aufnehmenden Portionsräumen (11, 12, 17) von einer durch die Einwirkung der Mischvibration nicht zerstörbaren Packungshülle (8, 16, 19, 27) umschlossen ist.

2. Portionspackung nach Anspruch 1, dadurch gekennzeichnet, dass die Packungshülle von einem flexiblen Hüllfolienbeutel (8, 16) gebildet ist.

3. Portionspackung nach Anspruch 2, dadurch gekennzeichnet, dass zwei Folienbeutel vorhanden sind, von denen einer als Hüllfolienbeutel (16) eine erste Dentalmaterialkomponente und den die zweite Dentalmaterialkomponente enthaltenden anderen Folienbeutel (18) frei umschliesst.

4. Portionspackung nach Anspruch 2, dadurch gekennzeichnet, dass zwei gemeinsam den Hüllfolienbeutel bildende Folien (8) beiderseits der zerstörbaren Folie (9, 15) mit dieser bzw. miteinander verschweisst sind.

5. Portionspackung nach Anspruch 1, dadurch gekennzeichnet, dass die Packungshülle einen halbflexiblen becherförmigen Packungsteil (27) umfasst.

6. Portionspackung nach einem der Ansprüche 1 bis 5, dadurch gekennzeichnet, dass die Packungshülle mit einer Öffnungseinrichtung (13, 14; 22, 23) versehen ist.

7. Portionspackung nach einem der Ansprüche 1 bis 6, dadurch gekennzeichnet, dass sie die Dentalmaterialkomponenten ohne wesentlichen Leerraum umschliesst.

8. Portionspackung nach einem der Ansprüche 1 bis 7, dadurch gekennzeichnet, dass sie ein Pistill (24) enthält.

9. Portionspackung nach einem der Ansprüche 1 bis 8, dadurch gekennzeichnet, dass eine pulverförmige Dentalmaterialkomponente brikettiert (25) ist.

**Claims**

1. A single-dose sachet for dental material to be mixed in a mixing capsule (1), with a sachet film (9, 15, 18, 21) which in storage condition separates one dental material component from another and which can be destroyed by the action of mixing vibration, characterised in that the sachet film (9, 15, 18, 21), which is destroyed by the action of the mixing vibration, together with the single-dose chambers (11, 12, 17) separated thereby and accommodating the dental material components, is surrounded by a sachet casing (8, 16, 19, 27) which is not destroyed by the mixing vibration.

2. A single-dose sachet according to claim 1, characterised in that the sachet casing is formed by a flexible casing film blister (8, 16).

3. A single-dose sachet according to claim 2, characterised in that two film blisters are provided, one of which as a casing film blister freely encloses a first dental material component and the other film blister (18) containing the second dental material component.

4. A single-dose sachet according to claim 2, characterised in that two films (8) together forming the casing film blister are welded on either side of the destructible film (9, 15) to the latter or to one another.

5. A single-dose sachet according to claim 1, characterised in that the sachet casing comprises a semi-flexible cup-shaped sachet part (27).

6. A single-dose sachet according to any of claims 1 to 5, characterised in that the sachet casing is provided with an opening means (13, 14; 22, 23).

7. A single-dose sachet according to any of claims 1 to 6, characterised in that it encloses the dental material components substantially without any voids.

8. A single-dose sachet according to any of claims 1 to 7, characterised in that it contains a pestle (24).

9. A single-dose sachet according to any of claims 1 to 8, characterised in that a powered dental material component is briquetted (25).

**Revendications**

1. Cartouche pour matériau dentaire destiné à être mélangé dans une capsule de mélangeage (1), comportant une feuille d'emballage (9, 15, 18, 21) qui sépare l'un de l'autre les composants du matériau dentaire lors du stockage et qui peut être détruite sous l'effet de vibrations de mélangeage, caractérisée en ce que la feuille d'emballage (9, 15, 18, 21) destructible sous l'effet des vibrations de mélangeage est entourée, avec les compartiments (11, 12, 17) qui sont séparés par elle et qui reçoivent les composants du matériau dentaire, par une enveloppe d'emballage (8, 16, 19, 27) non destructible sous l'effet des vibrations de mélangeage.

2. Cartouche selon la revendication 1, caractérisée en ce que l'enveloppe d'emballage est constituée par un sachet en feuille de plastique souple d'enveloppe (8, 16).

3. Cartouche selon la revendication 2, caractérisée en ce qu'il est prévu deux sachets en feuille de plastique, dont l'un entoure librement, en tant que sachet en feuille de plastique d'enveloppe (16), un premier composant du matériau dentaire et l'autre sachet en feuille de plastique (18) qui contient le second composant du matériau dentaire.

4. Cartouche selon la revendication 2, caractérisée en ce que deux feuilles de plastique (8) formant ensemble le sachet en feuille de plastique d'enveloppe sont soudées de part et d'autre de la feuille destructible (9, 15) à celui-ci ou l'une à l'autre.

5. Cartouche selon la revendication 1, caractérisée en ce que l'enveloppe d'emballage comprend une partie d'emballage demi-souple en forme de godet (27).

6. Cartouche selon l'une quelconque des revendications 1 à 5, caractérisée en ce que l'enveloppe d'emballage est munie d'un système d'ouverture (13, 14; 22, 23).

7. Cartouche selon l'une quelconque des revendications 1 à 6, caractérisée en ce qu'elle renferme les composants du matériau dentaire sans espace vide appréciable.

8. Cartouche selon l'une quelconque des revendications 1 à 7, caractérisée en ce qu'elle contient un pilon (24).

9. Cartouche selon l'une quelconque des revendications 1 à 8, caractérisée en ce qu'un composant en poudre du matériau dentaire est aggloméré.

Fig.1

Fig.2

Fig.3

Fig.4

Fig.5

Fig.6

Fig.7

Fig.8

Fig.9